# EUROPEAN PATENT APPLICATION

(11) **EP 4 306 445 A1**
(43) Date of publication of application: **17.01.2024**
(21) Application number: 23184615.5
(22) Date of filing: 11.07.2023
(51) Int. Cl.: B65D 75/58

(54) **SPOUT FOR PLASTIC PACKAGING**

(30) Priority: 14.07.2022 PL 44173822
(71) Applicant: ELPLAST Europe Sp. z o. o., 44-240 Zory (PL)
(72) Inventor: PAWELAK, Marcin, 44-668 Katowice (PL)
(74) Representative: Marek, Joanna

(57) **Abstract**

The object of the invention is a spout for flexible plastic packaging in the form of a body (1) with a cylindrical, through-hole structure, which body (1) in the upper part (2) has a shaped thread (21) under which there is a shaped nut retaining assembly (22), while the lower part (3) of the body (1) comprises symmetrical and opposite extensions of the outer wall of the body passing into flat, side walls (31) arranged transversely to the surface of the body (1), the upper part (2) and the lower part (3) being separated from each other by a separating element (4) perpendicular to the axis of the cylindrical body (1), characterized in that on the lower part (3) of the body (1), there is a layer of adhesive agent (5), the height of the layer of adhesive agent (5) being in the range from 70 to 90% of the height of the lower part (3) of the spout body (1) and the thickness of the layer of adhesive agent (5) being not more than 0.5 mm.

## Description

The object of the invention is a spout for use in flexible plastic packaging for storing food products such as yoghurt, fruit and vegetable mousses or industrial products such as liquid soaps and dishwashing liquids.

Spouts, stubs that are welded to a plastic container, are known in the state of the art. Spouts are manufactured by plastic injection moulding, particularly from polyethylene or polypropylene and their derivatives, and are then welded to the packaging.

From the US invention application US5823383A1, there is known a plastic spouting element for connecting with a plastic container, in particular with a container obtained from a plastic film, containing at least one weld extending circumferentially around the neck portion delimiting the outlet channel and having a heat sealing edge or surface. The sealing edge is provided on a weld flash formed on a portion of the weld rib base with a smaller dimension in directions perpendicular to the circumferential direction than in the portion of the rib base

From the US patent description US10501241 (B2), there is known a spout, which includes a mounting portion to which a pouch of a container assembly is sealed. The exterior of the mounting portion is defined by a smooth, non-angled surface free of edges or sharp transition portions, and is defined along its height by a generally sinusoidal, wave-like pattern formed by alternating peaks and troughs. The exterior of the mounting portion is structured such that the ratio of the length of the portion of the mounting portion exterior surface extending between adjacent peaks to the height between adjacent peaks is minimized to no more than 10%, and more preferably no more than 5%. By minimizing this ratio, the amount that a pouch will stretch if it is pushed into the cavities formed between adjacent peaks of the mounting portion (e.g. during an HPP process) is minimized, thereby preventing damage to the pouch and/or attachment between the pouch and spout.

The increasing requirements to recycle or reuse plastic packaging have necessitated the development of entire packaging obtained from monomaterial. In this type of packaging, each component of the packaging is made from the same type of plastic, allowing it to be recycled without having to separate the individual packaging components.

However, in the process of welding the spout to the flexible packaging made from the same type of polymer, defects appeared in the final product at the point of connection between the spout and the flexible packaging in the form of, for example: wrinkles, micro-channels, thinning, burning of the material or a change in the colour of the packaging, which significantly affects not only the aesthetics of the packaging, but also its strength.

The purpose of the invention is to provide a spout designed to be joined to a flexible packaging, particularly where both the spout and the packaging are made of the same type of polymer, the welding of which to the packaging would be permanent and free from defects known to the state of the art and resulting from the high temperature of the process.

The essence of the invention is a spout for flexible plastic packaging in the form of a body with a cylindrical, through-hole structure, which body in the upper part has a shaped thread under which there is a shaped nut retaining assembly, while the lower part of the body comprises symmetrical and opposite extensions of the outer wall of the body passing into flat side walls arranged transversely to the surface of the body, the upper part and the lower part being separated from each other by a separating element perpendicular to the axis of the cylindrical body, characterised in that on the lower part of the body, there is a layer of adhesive agent, the height of the layer being in the range of 70 to 90 % of the height of the lower part of the spout body and the thickness of the adhesive layer being not more than 0.5 mm.

The separating element is polygonal or circular or elliptical in shape.

Preferably, at least one ribbing perpendicular to the axis of the body is formed on the surface of the lower part of the body.

Two parallel sets of ribbing are formed on the lower part of the body.

Optionally, the adhesive layer thickness is 0.5 mm.

Optionally, the adhesive layer thickness is 0.4 mm.

The adhesive agent is an ethylene-based octene-1 plastomer or an ethylene-based hexene-1 plastomer or an ethylene-vinyl acetate copolymer.

The opposite extensions of the outer wall of the body passing into the flat side walls of the opposite extensions of the outer wall of the spout body contain cut-outs at their edges, preferably triangular.

The spout is made of polyethylene or polypropylene.

Both the spouts known from the state of the art and the spout according to the present invention are obtained by moulding. The adhesive layer is applied to the spouts according to the invention by spraying and can be applied to already moulded spouts but can also be applied in the mould by post-injection, just after the moulding process.

The lower part of the spout body is designed to connect the spout to the flexible packaging. The method of joining the spout to the flexible packaging is known from the state of the art and consists in welding the two components together, and by using an adhesive layer applied to the lower part of the body of the spout according to the invention, it was possible to reduce the temperature of the process of welding the spout and the flexible packaging by at least 30°C, and this in turn enabled the use of thinner materials for the production of flexible packaging.

Unexpectedly, it turned out that by using a layer of adhesive agent on the lower part of the spout body according to the invention, disadvantages occurring when welding spouts with flexible containers especially those obtained from polymers of the same type were eliminated.

Furthermore, where cut-outs are provided on the edges of the flat side walls of the body wall extension - this increases the surface area and the amount of the adhesive layer, which strengthens the connection of the flexible package with the spout according to the invention.

The horizontal parallel sets of ribbing formed on the lower part of the spout body allow the application of a greater layer of adhesive agent which, when the spout is welded to the flexible packaging, melts between the sets of ribbing further strengthening the weld.

The choice of adhesion agents used in the spout according to the invention depends on the intended use of the flexible packaging containing the spout in question. If the spout packaging according to the invention is intended for food it is necessary that the adhesive agent is also approved for this type of products.

The object according to the invention is shown in the drawing, in which the respective figures represent:
Fig. 1 spout according to the invention, in perspective view;
Fig. 2 spout according to the invention, in side view;
Fig. 3 spout according to the invention, in front view;
Fig. 4 cross-section of the spout according to the invention;

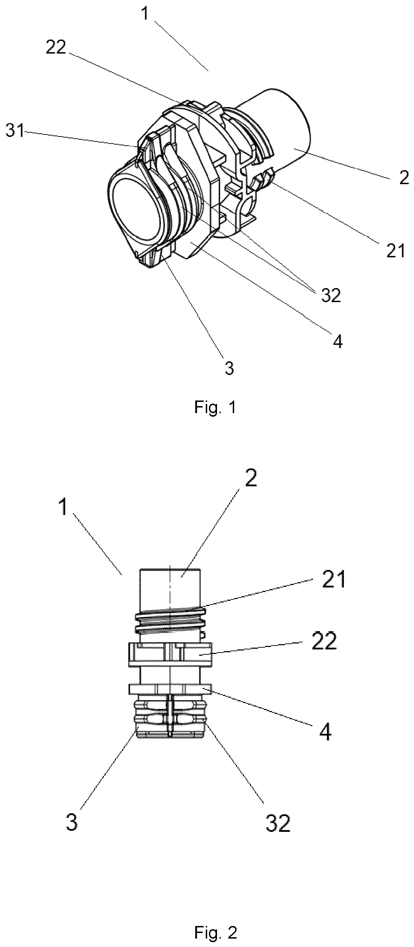

Fig. 1, fig. 2 and fig. 3 show a spout for flexible plastic packaging in the form of a body 1 with a cylindrical, through-hole design. The body 1 consists of an upper part 2 on which the thread 21 is formed. Underneath the thread 21, an attachment assembly 22 is formed in the form of parallel moulded rigid elements containing flexible tabs which, when the spout is closed, connect to the tabs of the cap. Both the thread 21 and the fixing assembly 22 are designed to accommodate a cap or other type of flexible package closure on the spout once it has been connected to the spout and filled with the intended product. Neither the cap nor the packaging are the subject of the present invention.

The shape of the fixing assembly 22 depends on the type of closure of the flexible packaging with which the spout according to the invention will be welded. The type of closure is also not the essence of the invention and solutions known from the state of the art can be used in the spout according to the present invention.

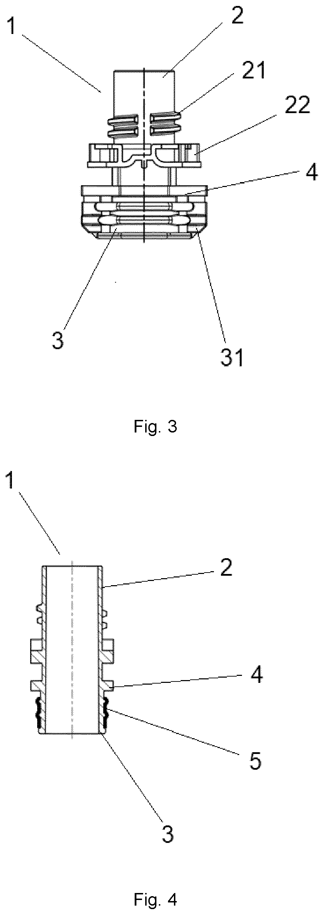

Furthermore, the body 1 consists of a lower part 3 which comprises symmetrical and opposite extensions of the outer wall of the body 1 passing into flat lateral walls 31 arranged transversely to the surface of the body 1. The upper part 2 of the body 1 and its lower part 3 are separated by a separating element 4 perpendicular to the axis of the cylindrical body 1. The lower part 3 of the body 1 is coated with the adhesive 5 shown in fig 4. The amount of adhesive is no more than 90% of the surface area of the lower part 3 of the body 1 and its thickness does not exceed 0.4 mm.

Parallel sets of ribbing 32 may be formed on the surface of the lower part 3 of the body 1, between which there is a thicker layer of adhesive agent 5.

The edges of the flat side walls of the 31 opposite extensions of the outer wall of the spout body may contain cut-outs, for example, triangular ones.

## Claims

1. A spout for flexible plastic packaging in the form of a body (1) with a cylindrical, through-hole structure, which body (1) in the upper part (2) has a shaped thread (21) under which there is a shaped nut retaining assembly (22), while the lower part (3) of the body (1) comprises symmetrical and opposite extensions of the outer wall of the body passing into flat, side walls (31) arranged transversely to the surface of the body (1), the upper part (2) and the lower part (3) being separated from each other by a separating element (4) perpendicular to the axis of the cylindrical body (1), **characterized in that** on the lower part (3) of the body (1), there is a layer of adhesive agent (5), the height of the layer of adhesive agent (5) being in the range from 70 to 90% of the height of the lower part (3) of the spout body (1) and the thickness of the layer of adhesive agent (5) being not more than 0.5 mm.

2. Spout according to claim 1, **characterised in that** the separating element (4) is polygonal or circular or elliptical in shape.

3. Spout according to claim 1 **characterized in that** at least one ribbing (32) perpendicular to the axis of the body (1) is formed on the surface of the lower part (3) of the body (1).

4. Spout according to claim 1, **characterised in that** two parallel sets ribbing (32) are formed on the lower part (3) of the body (1).

5. Spout according to claim 1, **characterised in that** the thickness of the layer of adhesive agent (5) is 0.5 mm.

6. Spout according to claim 1, **characterised in that** the thickness of the adhesive layer is 0.4 mm.

7. Spout according to claim 1, **characterised in that** the adhesive agent (5) is an ethylene-based octene-1 plastomer or an ethylene-based hexene-1 plastomer or an ethylene-vinyl acetate copolymer.

8. Spout according to claim 1 **characterized in that** the opposite extensions of the outer wall of the body passing into the flat side walls (31) of the opposite extensions of the outer wall of the spout body contain cut-outs at their edges.

9. Spout according to claim 8 **characterised in that** the cut-outs are triangular.

10. Spout according to claim 1, **characterised in that** it is obtained from polyethylene or polypropylene.
